# EUROPÄISCHE PATENTSCHRIFT

(11) **EP 1 577 590 B1**
(45) Veröffentlichungstag und Bekanntmachung des Hinweises auf die Patenterteilung: **15.11.2017**
(21) Anmeldenummer: 05010444.7
(22) Anmeldetag: 21.03.2002
(51) Int. Cl.: F16J 15/08

(54) **Zylinderkopfdichtung**
Cylinder head gasket
Joint de culasse

(30) Priorität: 05.04.2001 DE 10117178
(43) Veröffentlichungstag der Anmeldung: 21.09.2005
(62) Teilanmeldung aus: 02006320.2
(73) Patentinhaber: ElringKlinger AG, 72581 Dettingen (DE)
(72) Erfinder: Werz, Ulrich, 72581 Dettingen/Erms (DE); Diez, Armin, 73252 Lenningen (DE)
(74) Vertreter: Henseler, Daniela

(56) Entgegenhaltungen:
- EP-A- 0 740 092
- EP-A- 0 797 029
- EP-A- 0 950 842
- EP-A- 1 179 695
- DE-C1- 19 513 360

## Beschreibung

Die Erfindung betrifft eine metallische Zylinderkopfdichtung nach dem Oberbegriff des Anspruchs 1.

Aus DE 195 13 360 C1 ist eine derartige Zylinderkopfdichtung bekannt. Zum Ausgleich der Horizontalbeanspruchung, das heißt in Richtung der Dichtungsebene, infolge unterschiedlicher Wärmeausdehnungen von Zylinderkopf und -block aus Materialien mit unterschiedlichen Wärmeausdehnungskoeffizienten, wodurch die Sicke noch zusätzlich in Richtung der Dichtungsebene beansprucht wird, kann ein höhen- und/oder breitenprofilierter Verformungsbegrenzer vorgesehen sein.

Aus EP 0 306 766 B1 oder EP 0 230 804 B1 ist eine metallische Zylinderkopfdichtung für eine Brennkraftmaschine bekannt, bei der ein Trägerblech zusammen mit mindestens einem gesickten, elastischen Deckblech als Funktionsblech vorgesehen sind. Da sich der Dichtspalt zwischen Zylinderkopf und Zylinderblock einer Brennkraftmaschine im Betrieb in Abhängigkeit vom Arbeitstakt des jeweils betrachteten Zylinders ändert, ist die Dichtung ständigen Pressungsänderungen unterworfen und muss zur Aufrechterhaltung einer einwandfreien Abdichtung dauerhafte Federungseigenschaften aufweisen. Hierzu wird die um die jeweilige Brennkammeröffnung herum verlaufende, als Federelement wirkende Sicke durch einen entlang des Brennkammerrandes angeordneten Federwegbegrenzer oder Stopper geschützt, der den Federweg der Sicke, die den auftretenden, vertikal zur Dichtungsebene erfolgenden Relativbewegungen des Zylinderkopfes gegenüber dem Zylinderblock folgt, begrenzt, so daß sich die Sicke nur in dem für sie vorgesehenen Federwegbereich bewegt und nicht platt gedrückt werden kann. Hierzu darf auch die Entlastung der Sicke nicht vollständig sein, sondern nur soweit erfolgen, daß eine Mindestverformung beim höchsten auftretenden Brennraumdruck die erforderliche Abdichtung sicherstellt. Der Federwegbegrenzer bildet eine sich entlang des Brennkammerrandes erstreckende Überhöhung der Zylinderkopfdichtung.

Für Brennkraftmaschinen mit Zylinderlaufbüchsen sind derartige Dichtungen jedoch ungeeignet, da die Einleitung vertikaler Kräfte, die beim Einspannen der bzw. bei eingespannter Dichtung auftreten, am Brennkammerrand und damit im wesentlichen in die Zylinderlaufbüchse erfolgt, so daß Kippmomente auftreten.

Aus EP 0 740 092 A1 ist deshalb eine metallische Zylinderkopfdichtung für eine Brennkraftmaschine bekannt, die Zylinderlaufbüchsen aufweist. Diese umfaßt wenigstens ein gesicktes Deckblech und ein Trägerblech und ist mit einem für die jeweilige Sicke vorgesehenen, eine Überhöhung für die Dichtung bildenden Verformungsbegrenzer versehen, der durch einen Ring auf dem Trägerblech gebildet wird und auf der der Brennkammeröffnung abgewandten Seite der Sicke angebracht ist, so daß er sich auf dem Büchsenbund abstützt.

Aus DE 195 13 360 C1 ist eine metallische Zylinderkopfdichtung für eine Brennkraftmaschine bekannt, bei der wenigstens ein gesicktes Deckblech und ein Trägerblech vorgesehen sind, wobei um jede Öffnung herum entlang des Brennkammerrandes ein Verformungsbegrenzer für die jeweilige Sicke vorgesehen ist. Der Verformungsbegrenzer ist dabei entsprechend der Bauteilsteifigkeit von Zylinderkopf und -block in Umfangsrichtung höhen- und/oder breitenprofiliert, um eine möglichst gleichmäßige Preßkraftverteilung zu erreichen. Ferner kann hierbei neben dem inneren Verformungsbegrenzer auch ein äußerer Verformungsbegrenzer auf der in bezug zur Brennkammeröffnung abgewandten Seite der jeweiligen Sicke vorgesehen sein, um hierdurch eine möglichst vertikal zur Dichtungsebene erfolgende Krafteinleitung in den Sickenbereich zu erzielen.

Vor allem bei Brennkraftmaschinen mit Zylinderlaufbuchsen hat sich herausgestellt, daß selbst bei Verwendung eines höhen- und/oder breitenprofilierten äußeren Verformungsbegrenzers immer wieder Probleme hinsichtlich der Dichtheit der Zylinderkopfdichtung auftreten. Dieses Problem konnte auch nicht dadurch gelöst werden, daß zusätzlich ein entsprechender innerer Verformungsbegrenzer verwendet wurde.

Aufgabe der Erfindung ist es daher, eine Zylinderkopfdichtung nach dem Oberbegriff des Anspruchs 1 zu schaffen, die ein verbessertes Dichtverhalten zeigt.

Diese Aufgabe wird entsprechend dem kennzeichnenden Teil des Anspruchs 1 gelöst.

Dadurch, daß bei dem Verformungsbegrenzer im Stegbereich zwischen zwei Brennkammeröffnungen durch die Betriebstemperatur der Brennkraftmaschine zu erwartende Wärmedehnungen durch Höhen- und/oder Breitenprofilierung berücksichtigt sind, oder daß im Stegbereich zwischen zwei Brennkammeröffnungen der Verformungsbegrenzer eine gleichbleibende Höhe aufweist und ein Trägerblech mit einer Höhenprofilierung entsprechend infolge durch die Betriebstemperatur der Brennkraftmaschine zu erwartender Wärmedehnungen versehen ist, wobei der Verformungsbegrenzer im Bereich der Höhenprofilierung des Trägerblechs angeordnet ist, läßt sich die Dichtheit der Zylinderkopfdichtung erhöhen. Dies trifft insbesondere bei Brennkraftmaschinen mit schmalen Stegen zwischen den Brennkammern zu, da von diesen Stegen offenbar die Wärmeabfuhr schlechter als von anderen Bereichen des Zylinderblocks ist, so daß sich dort die Wärmedehnungen stärker bemerkbar machen und zu unzulässigen Pressungserhöhungen führen, da bisher im Bereich der Stege von einer geringeren Bauteilsteifigkeit bzw. einer erhöhten -nachgiebigkeit ausgegangen und damit der Verformungsbegrenzer höher als in anderen Bereichen ausgebildet wurde, so daß dann unzulässige Preßdrücke erreicht wurden, die zu bleibenden Verformungen der Motorbauteile und damit zu Undichtigkeiten sowie letztlich sogar zu vermehrten Sickenrissen führten. In diesem Zusammenhang ist zu bemerken, daß der Arbeitsbereich der Sicken dementsprechend auf die auf Betriebstemperatur befindliche Brennkraftmaschine ausgerichtet ist.

Insbesondere wird ein Verformungsbegrenzer verwendet, wobei bei der Höhen- und/oder Breitenprofilierung des Verformungsbegrenzers zusätzlich die Preßdruckerhöhung infolge durch die während des Betriebs auftretenden Temperaturen beispielsweise bei etwa 60 bis 100% der Vollast der Brennkraftmaschine, insbesondere bei maximaler Auslastung zu erwartender Wärmedehnungen derart berücksichtigt ist, daß die Profilierung im wesentlichen entsprechend einem Mittelbereich zwischen Preßdruckerhöhung durch Wärmedehnungen und Preßdruckerniedrigung durch Bauteilsteifigkeiten ausgebildet ist.

Weitere Ausgestaltungen der Erfindung sind der nachfolgenden Beschreibung und den Unteransprüchen zu entnehmen.

Die Erfindung wird nachstehend anhand von in den beigefügten Abbildungen dargestellten Ausführungsbeispielen näher erläutert.
Fig. 1 zeigt in Draufsicht ausschnittweise eine Zylinderkopfdichtung.
Fig. 2 bis 4 zeigen Schnitte entsprechend der Linie I-I von Fig. 1 für unterschiedliche Ausführungsformen der Zylinderkopfdichtung.
Fig. 5 zeigt ein Diagramm bezüglich der Steifigkeit und Preßkraft in Abhängigkeit zum Schraubenabstand über einen Teilbereich eines Verformungsbegrenzers.
Fig. 6 zeigt ein Diagramm bezüglich der Temperaturdehnung der Bauteile einer Brennkraftmaschine über den in Fig. 5 betrachteten Bereich.
Fig. 7 zeigt ein Diagramm bezüglich einer Optimierung der Höhenprofilierung eines Verformungsbegrenzers.
Fig. 8 und 9 zeigen zwei Schnitte entsprechend den Linien I-I und II-II von Fig. 1 einer weiteren Ausführungsform einer Zylinderkopfdichtung.
Fig. 10 zeigt einen Schnitt entsprechend der Linie I-I einer zusätzlichen Ausführungsform einer Zylinderkopfdichtung.
Fig. 11 zeigt einen Schnitt entsprechend der Linie I-I einer gegenüber Fig. 10 geänderten Ausführungsform.
Fig. 12 zeigt einen Schnitt längs der Linie I-I von Fig. 1 einer zusätzlichen Ausführungsform.
Fig. 13 zeigt einen Schnitt längs der Linie I-I von Fig. 1 einer weiteren Ausführungsform.

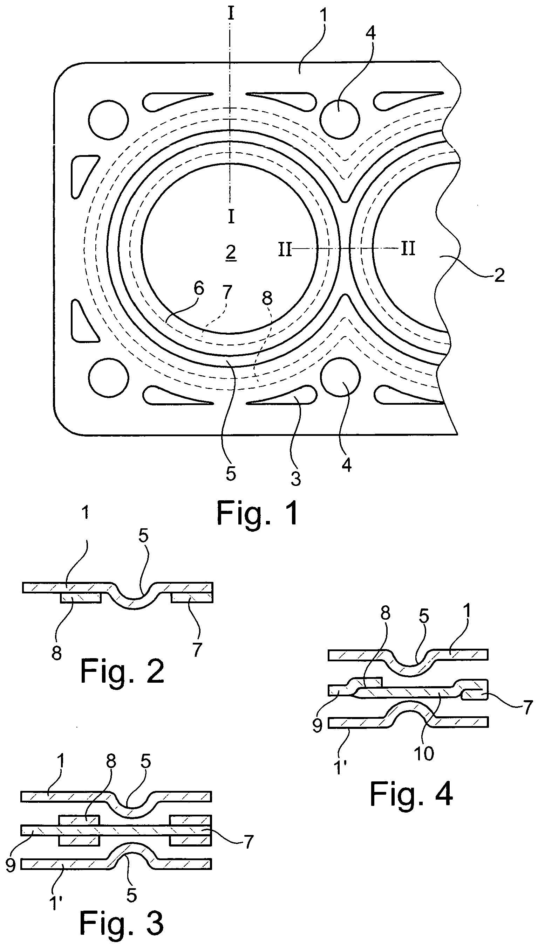

Die in Fig. 1 in Draufsicht ausschnittweise dargestellte Zylinderkopfdichtung umfaßt ein elastisches, üblicherweise aus Federstahl hergestelltes Deckblech 1, das mit einer Reihe von benachbart nebeneinander angeordneten, jeweils durch einen schmalen Steg getrennten Brennkammeröffnungen 2 entsprechend den Brennkammern einer Brennkraftmaschine sowie ferner mit Fluiddurchtrittsöffnungen 3 etwa für Kühlwasser bzw. Öl und Schraubendurchtrittsöffnungen 4 für Schrauben versehen ist, die zum Verspannen von Zylinderblock und Zylinderkopf der Brennkraftmaschine verwendet werden. Das Deckblech 1 ist mit Sicken 5 versehen, die mit Abstand unter Belassung eines geraden Blechabschnitts 6 im Randbereich der Brennkammeröffnung 2 angeordnet sind. Um die übrigen Öffnungen 3,4 herum sind ebenfalls hier nicht dargestellte Abdichtungen wie Halbsicken oder Raupen aus gummielastischem Material vorgesehen.

Für die jeweilige Sicke 5 ist entlang der Brennkammeröffnung 2 ein innerer Verformungsbegrenzer 7 vorgesehen. Statt dessen oder zusammen hiermit ist ferner ein äußerer Verformungsbegrenzer 8 vorgesehen, der sich bezüglich der Sicke 5 auf der der Brennkammeröffnung 2 abgewandten Seite der Sicke 5 befindet. Beide Verformungsbegrenzer 7, 8 befinden sich auf der Seite des Deckblechs 1, zu der die Sicke 5 gewölbt ist, um deren Federweg begrenzen zu können.

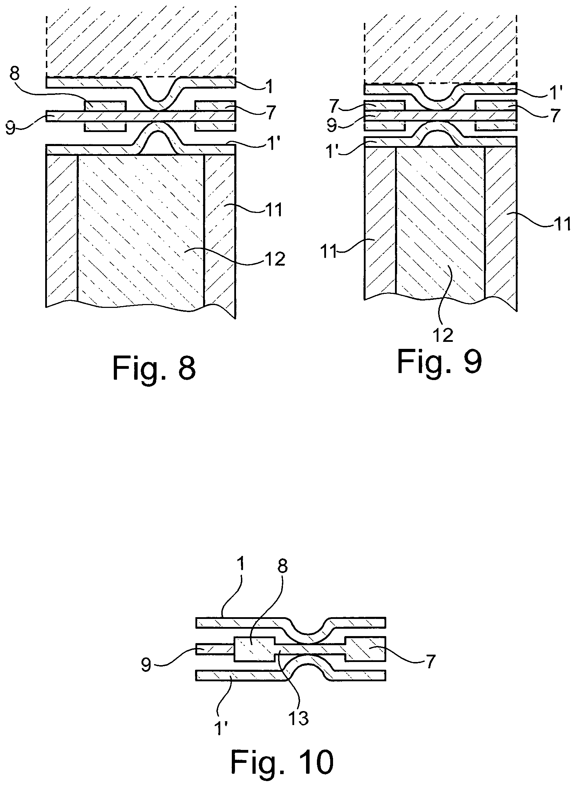

Der oder die Verformungsbegrenzer 7, 8 können an dem Deckblech 1 oder an einem separaten Träger- oder Falzblech 9 bzw. 10 angeordnet sein, vgl. Fig. 2 bis 4, wobei zudem ein zweites, elastisches, gesicktes Decklech 1' vorgesehen sein kann und dann vorzugsweise der Verformungsbegrenzer 7 bzw. 8 bezüglich der beiden spiegelsymmetrisch zueinander angeordneten Deckbleche 1, 1' vermittelt ist. Wenn der Verformungsbegrenzer 7 bzw. 8 aus Metall besteht, kann er aufgeschweißt sein. Er kann aber auch aus einem stark gefüllten Kunststoff bestehen und beispielsweise durch Siebdrucken aufgebracht sein. Auch kann er durch andere Verfahren wie Plasmaspritzen aufgebracht oder ferner angeformt sein, vgl. Fig. 10.

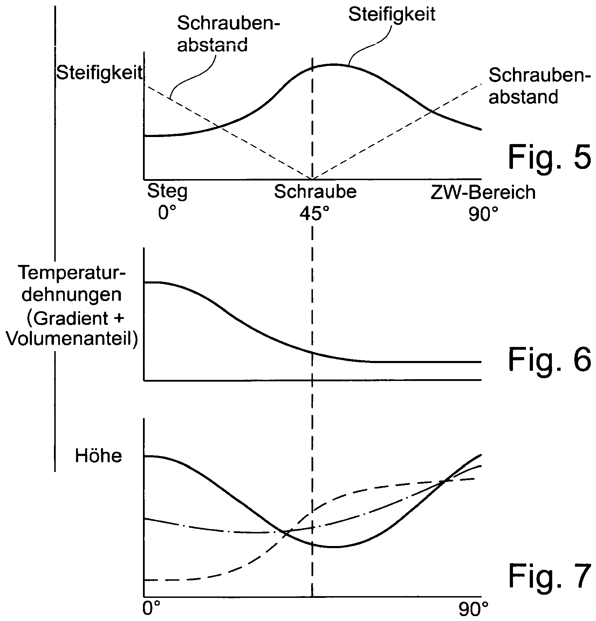

Wie in Fig. 5 dargestellt ist, ergibt sich unter der Voraussetzung, daß der Verformungsbegrenzer 7 bzw. 8 eine gleichbleibende Höhe aufweist, eine entsprechend dem Schraubenabstand kontinuierliche, durch gleichmäßig angezogene Schrauben erzeugte, auf die so eingespannte Zylinderkopfdichtung ausgeübte Preßkraftabnahme (gestrichelt eingezeichnet) von einer Schraube zur anderen bis zum Mittelbereich zwischen zwei benachbarten Schrauben, die hier an den Ecken eines Quadrats angeordnet sind. Fig. 5 betrachtet dementsprechend den Bereich von der Mitte des Stegs (0°) zwischen zwei Brennkammeröffnungen 2 bis zur Linie I-I (90°). Die Bauteilsteifigkeit (durchgezogen dargestellt) ist demgegenüber im Bereich der Schraubendurchtrittsöffnung 4 am größten und fällt zum Schraubenzwischenbereich hin ab.

Nicht berücksichtigt sind hier zusätzliche Änderungen der Bauteilsteifigkeit aufgrund von entsprechenden Kanälen bzw. Öffnungen in den Bauteilen entsprechend den Fluiddurchtrittsöffnungen 3 und auch aufgrund von Bereichen geringerer Wandstärke etwa im Zylinderkopf. Diese können die beiden in Fig. 5 dargestellten Kurven verändern bzw. teilweise verschieben.

In Fig. 6 ist die Temperaturausdehnung für den in Fig. 5 dargestellten Bereich dargestellt. Ersichtlich ist dieser im Bereich des Stegs am größten, zumal dieser dünn ist und die Wärmeabfuhr aus diesem Bereich gegenüber anderen Bereichen relativ schlecht ist. Auch diese Kurve wird durch kältere Bereiche etwa benachbart zu Kühlwasserkanälen entsprechend beeinflußt. Dies ist hier nicht berücksichtigt.

In Fig. 7 ist eine Höhenprofilierung des Verformungsbegrenzers 7 bzw. 8 für den gleichen Bereich, wie er in den Fig. 5 und 6 betrachtet wird, einerseits zur Kompensation der Bauteilsteifigkeitsänderungen (durchgezogen) und andererseits zur Kompensation der Temperaturdehnungen (gestrichelt) dargestellt. Um beide Effekte zu berücksichtigen, ist die tatsächliche Höhenprofilierung des Verformungsbegrenzers 7 bzw. 8 im wesentlichen entsprechend einem Mittelbereich zwischen Preßdruckerhöhung durch Wärmedehnungen und Preßdruckerniedrigung durch Bauteilsteifigkeiten ausgebildet (strichpunktiert).

Auf diese Weise ist es möglich, bleibende Verformungen an den Motorbauteilen zu reduzieren oder gar zu verhindern. Es treten weniger Sickenrisse auf.

Bei der in Fig. 8, 9 im Schnitt entsprechend den Linien I-I und II-II von Fig. 1 dargestellten Zylinderkopfdichtung handelt es sich um eine solche für eine Brennkraftmaschine mit Zylinderlaufbuchsen 11, die in entsprechende Bohrungen eines Zylinderblocks 12 eingesetzt sind und die Brennkammern bilden. Hierbei kann es sich z.B. um einen Zylinderblock 12 aus einer Aluminiumlegierung und um Zylinderlaufbuchsen 11 aus Grauguß handeln. Im Stegbereich zwischen zwei benachbarten Brennkammern laufen beim dargestellten Ausführungsbeispiel die Sicken 5 zu einer gemeinsamen Sicke zusammen. Die äußeren Verformungsbegrenzer 8 umgeben die Sicken 5 brillenartig.

Hierbei kann vorteilhafterweise auch eine "radiale" Höhenprofilierung vorgesehen sein, indem je nach Bauteilsteifigkeit und Temperaturdehnung der innere Verformungsbegrenzer 7 höher oder niedriger als oder gleich hoch (radial zur Brennkammerachse oder in Längsrichtung der Brennkraftmaschine betrachtet) wie der äußere Verformungsbegrenzer 8 ausgebildet sein kann.

Bei der in Fig. 10 dargestellten Ausführungsform werden der innere und äußere Verformungsbegrenzer 7, 8 an einem eingelegten Ring 13 durch angestauchte Ränder hiervon gebildet, wobei die Ränder beim Anstauchen gleichzeitig entsprechend höhen- und/oder breitenprofiliert werden. Durch das Anstauchen wird die Dauerfestigkeit des Verformungsbegrenzers 7 bzw. 8 erhöht und die Kantenpressung gering gehalten werden, wobei ein leichte Balligkeit oder Abschrägung des Verformungsbegrenzers 7 bzw. 8 radial nach außen dies zusätzlich unterstützt.

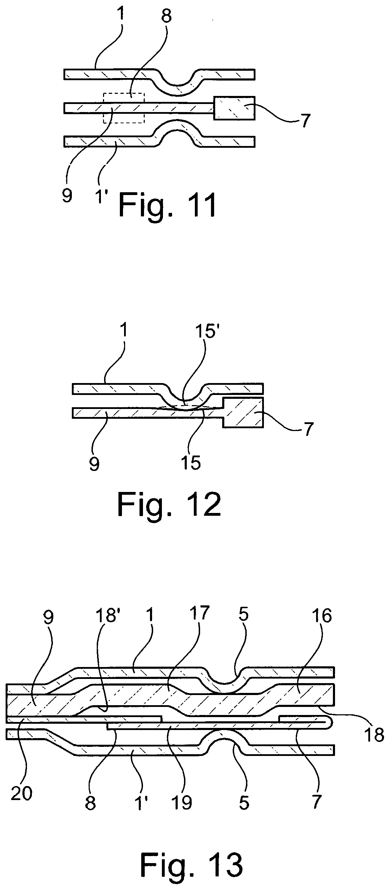

Bei der in Fig. 11 dargestellten Ausführungsform ist der Verformungsbegrenzer 7 als separater Ring ausgebildet, der in eine entsprechende Öffnung des Trägerblechs 9 eingelegt und mit diesem beispielsweise durch Schweißen verbunden ist.

Auch können, wie in Fig. 12 dargestellt, im Sickenaufstandsbereich auf dem Trägerblech 9 sich in Umfangsrichtung erstreckende Vertiefungen 15 (beispielsweise Prägungen) und/oder Erhöhungen (beispielsweise Auftragungen) 15' vorgesehen sein, die das Profil des Trägerblechs 9 im Sickenaufstandsbereich entsprechend ändern, wobei diese Profiländerungen des Trägerblechs 9 zur Anpassung der Eckpunkte des Sickenarbeitsbereichs an konstruktiv vorgegebene Auslegungspunkte gegebenenfalls unter Berücksichtigung der im Betrieb auftretenden Temperaturdehnungen dienen.

Bei der in Fig. 13 dargestellten Ausführungsform ist das Trägerblech 9 brennkammerseitig mit einem abgekröpften Abschnitt 16 sowie auf der der Brennkammer abgewandten Seite der Sicke 5 mit einer etwa trapezförmigen Sicke 17 versehen. Der Abschnitt 16 und die Sicke 17 bilden jeweils eine zur Sicke 5 konzentrische Fläche 18, 18', die entsprechend mit einer Höhenprofilierung im wesentlichen entsprechend einem Mittelbereich zwischen Preßdruckerhöhung durch Wärmedehnungen und Preßdruckerniedrigung durch Bauteilsteifigkeiten versehen ist und jeweils mit einem Verformungsbegrenzer 7 bzw. 8 konstanter Höhe zusammenwirken. D.h. die Höhen- und gegebenenfalls Breitenprofilierung ist hier am Trägerblech 9 etwa mittels entsprechendem Prägen vorgesehen, so daß insgesamt der durch die Verformungsbegrenzer 7 bzw. 8 verdickte Bereich zwischen den Deckblechen 1, 1' die entsprechende Profilierung aufweist. Hierbei wird der innere Verformungsbegrenzer 7 durch den am Brennkammerrand umgefalzten Rand eines Falzblechrings 19 gebildet, während der äußere Verformungsbegrenzer 8 durch die Überlappung zwischen dem Falzblechring 19 und einem Beilageblech 20 gebildet wird.

Die Erfindung ist auch auf Zylinderkopfdichtungen anwendbar, die nur eine Brennkammeröffnung aufweisen.

## Patentansprüche

1. Metallische Zylinderkopfdichtung für eine einen benachbarte Brennkammern aufweisenden Zylinderblock und einen damit durch Schrauben verbundenen Zylinderkopf aufweisende Brennkraftmaschine, mit wenigstens einer Blechlage (1) aus elastischem Metall, die mit einer oder mehreren Brennkammeröffnungen (2) entsprechend den Brennkammern der Brennkraftmaschine sowie mit Fluid- und Schraubendurchtrittsöffnungen (3, 4) versehen ist, wobei um jede Brennkammeröffnung (2) herum mit Abstand zu dieser unter Belassung eines geraden Blechabschnitts (6) im Öffnungsrandbereich eine Sicke (5) vorgesehen ist, deren Federweg durch einen sich konzentrisch zur Sicke (5) erstreckenden Verformungsbegrenzer (7, 8) begrenzt ist, **dadurch gekennzeichnet, daß** bei dem Verformungsbegrenzer (7, 8) im Stegbereich zwischen zwei Brennkammeröffnungen (2) durch die Betriebstemperatur der Brennkraftmaschine zu erwartende Pressdruckerhöhung durch Wärmedehnungen durch Höhen- und/oder Breitenprofilierung berücksichtigt sind, oder daß im Stegbereich zwischen zwei Brennkammeröffnungen (2) der Verformungsbegrenzer (7, 8) eine gleichbleibende Höhe aufweist und ein Trägerblech (9) mit einer Höhenprofilierung entsprechend infolge durch die Betriebstemperatur der Brennkraftmaschine zu erwartender Pressdruckerhöhung durch Wärmedehnungen versehen ist, wobei der Verformungsbegrenzer (7, 8) im Bereich der Höhenprofilierung des Trägerblechs (9) angeordnet ist.

2. Zylinderkopfdichtung nach Anspruch 1, **dadurch gekennzeichnet, daß** der Verformungsbegrenzer (7, 8) entsprechend der in bestimmten Bereichen aufgrund verminderter Bauteilsteifigkeit von Zylinderblock und Zylinderkopf im eingespannten Zustand der Zylinderkopfdichtung zu erwartender Preßdruckerniedrigungen höhen- und/oder breitenprofiliert ist.

3. Zylinderkopfdichtung nach Anspruch 2, **dadurch gekennzeichnet, daß** die Profilierung des Verformungsbegrenzers (7, 8) im wesentlichen entsprechend einem Mittelbereich zwischen zu erwartender Preßdruckerhöhung durch Wärmedehnungen und Preßdruckerniedrigung durch verminderte Bauteilsteifigkeiten von Zylinderblock und Zylinderkopf im eingespannten Zustand der Zylinderkopfdichtung ausgebildet ist.

4. Zylinderkopfdichtung nach einem der Ansprüche 1 bis 3, **dadurch gekennzeichnet, daß** die Höhenprofilierung der Verformungsbegrenzer (7, 8) geprägt ist.

5. Zylinderkopfdichtung nach einem der Ansprüche 1 bis 4, **dadurch gekennzeichnet, daß** die Höhe des Verformungsbegrenzers (7, 8) im Stegbereich zwischen zwei benachbarten Brennkammeröffnungen (2) gegenüber der Höhe im Bereich von benachbarten Schraubendurchtrittsöffnungen (4) erniedrigt ist.

6. Zylinderkopfdichtung nach einem der Ansprüche 1 bis 5, **dadurch gekennzeichnet, daß** auf beiden Seiten der jeweiligen Sicke (5) ein Verformungsbegrenzer (7, 8) angeordnet ist.

7. Zylinderkopfdichtung nach Anspruch 6, **dadurch gekennzeichnet, daß** der innere Verformungsbegrenzer (7) höher als der äußere Verformungsbegrenzer (8) ist.

8. Zylinderkopfdichtung nach Anspruch 6, **dadurch gekennzeichnet, daß** der innere Verformungsbegrenzer (7) gleich hoch wie der äußere Verformungsbegrenzer (8) ist.

9. Zylinderkopfdichtung nach Anspruch 6, **dadurch gekennzeichnet, daß** der innere Verformungsbegrenzer (7) niedriger als der äußere Verformungsbegrenzer (8) ist.

10. Zylinderkopfdichtung nach einem der Ansprüche 1 bis 5, **dadurch gekennzeichnet, daß** nur ein innerer oder ein äußerer Verformungsbegrenzer (7, 8) für jede der Sicken (5) vorgesehen ist.

11. Zylinderkopfdichtung nach einem der Ansprüche 1 bis 10, **dadurch gekennzeichnet, daß** der jeweilige Verformungsbegrenzer (7, 8) an einem Ring (13) oder Trägerblech (9) angestaucht ist.

12. Zylinderkopfdichtung nach einem der Ansprüche 1 bis 10, **dadurch gekennzeichnet, daß** der jeweilige Verformungsbegrenzer (7, 8) als separater Ring bzw. Ringabschnitt ausgebildet ist.

13. Zylinderkopfdichtung nach einem der Ansprüche 1 bis 12, **dadurch gekennzeichnet, daß** zwei gesickte Deckbleche (1, 1') vorgesehen sind, die spiegelsymmetrisch zueinander mit den Sickenscheiteln einander zugewandt angeordnet sind, zwischen denen sich die Verformungsbegrenzer (7, 8), gegebenenfalls an einem separaten Trägerblech (9), befinden.

## Claims

1. Metallic cylinder head gasket for an internal combustion engine comprising a cylinder block having adjacent combustion chambers and a cylinder head connected to the said block by bolts, with at least one sheet metal layer (1) of resilient metal, which is provided with one or more combustion chamber openings (2) corresponding to the combustion chambers of the internal combustion engine, and also with fluid and bolt passage openings (3, 4), wherein a bead (5) is provided around each combustion chamber opening (2), at a distance from the latter, leaving a straight sheet-metal portion (6) in the opening edge area and limited in its resilient deflection by a deformation limiter (7, 8) extending concentrically with respect to the bead (5), **characterized in that** the increase in the compression pressure to be expected as a result of thermal expansions because of the operating temperature of the internal combustion engine is taken into account by height and/or width profiling on the deformation limiter (7, 8) in the area of land between two combustion chamber openings (2), or **in that** the deformation limiter (7, 8) has a constant height in the area of land between two combustion chamber openings (2) and a carrier plate (9) is provided with a height profiling in accordance with the increase in the compression pressure to be expected as a result of thermal expansions because of the operating temperature of the internal combustion engine, wherein the deformation limiter (7, 8) is arranged in the area of the height profiling of the carrier plate (9).

2. Cylinder head gasket according to Claim 1, **characterized in that** the deformation limiter (7, 8) is profiled in height and/or width in accordance with the reductions in compression pressure to be expected in specific areas on account of reduced component stiffness of the cylinder block and the cylinder head in the clamped state of the cylinder head gasket.

3. Cylinder head gasket according to Claim 2, **characterized in that** the profiling of the deformation limiter (7, 8) is formed substantially in accordance with a mid-range between an increase in compression pressure to be expected as a result of thermal expansions and a reduction in compression pressure on account of reduced component stiffnesses of the cylinder block and the cylinder head in the clamped state of the cylinder head gasket.

4. Cylinder head gasket according to one of Claims 1 to 3, **characterized in that** the height profiling of the deformation limiters (7, 8) is embossed.

5. Cylinder head gasket according to one of Claims 1 to 4, **characterized in that** the height of the deformation limiter (7, 8) in the area of land between two adjacent combustion chamber openings (2) is reduced with respect to the height in the area of adjacent bolt passage openings (4).

6. Cylinder head gasket according to one of Claims 1 to 5, **characterized in that** a deformation limiter (7, 8) is arranged on both sides of the respective bead (5).

7. Cylinder head gasket according to Claim 6, **characterized in that** the inner deformation limiter (7) is higher than the outer deformation limiter (8).

8. Cylinder head gasket according to Claim 6, **characterized in that** the inner deformation limiter (7) is the same height as the outer deformation limiter (8).

9. Cylinder head gasket according to Claim 6, **characterized in that** the inner deformation limiter (7) is lower than the outer deformation limiter (8).

10. Cylinder head gasket according to one of Claims 1 to 5, **characterized in that** only an inner deformation limiter (7) or an outer deformation limiter (8) is provided for each of the beads (5).

11. Cylinder head gasket according to one of Claims 1 to 10, **characterized in that** the respective deformation limiter (7, 8) is upset on a ring (13) or a carrier plate (9).

12. Cylinder head gasket according to one of Claims 1 to 10, **characterized in that** the respective deformation limiter (7, 8) is formed as a separate ring or ring portion.

13. Cylinder head gasket according to one of Claims 1 to 12, **characterized in that** two beaded cover plates (1, 1') are provided, arranged mirror symmetrically in relation to one another with the bead vertices facing each other, between which cover plates the deformation limiters (7, 8) are located, possibly on a separate carrier plate (9).

## Revendications

1. Joint de culasse métallique pour un bloc-cylindres présentant des chambres de combustion adjacentes et un moteur à combustion interne présentant une culasse reliée au bloc-cylindres par des vis, comprenant au moins une couche de tôle (1) composée d'un métal élastique, qui est pourvue d'une ou de plusieurs ouvertures de chambre de combustion (2) selon les chambres de combustion du moteur à combustion interne ainsi que d'ouvertures de passage de fluide et de vis (3, 4), dans lequel est prévue, tout autour de l'ouverture de chambre de combustion (2), à une distance de cette dernière, tout en laissant une section de tôle (6) rectiligne, dans la zone de bord d'ouverture, une moulure (5), dont le débattement est limité par un limiteur de déformation (7, 8) s'étendant de manière concentrique par rapport à la moulure (5), **caractérisé en ce que** des augmentations de pression de compression attendues liées à des dilatations thermiques à travers le profilage en hauteur et/ou en largeur sont prises en compte dans le cas du limiteur de déformation (7, 8) dans la zone de liaison entre deux ouvertures de chambre de combustion (2) par la température de fonctionnement du moteur à combustion interne, ou que le limiteur de déformation (7, 8) présente une hauteur constante dans la zone de liaison entre deux ouvertures de chambre de combustion (2) et une tôle de support (9) est pourvue d'un profilage en hauteur de manière correspondante suite à l'augmentation de pression de compression attendue du fait de la température de fonctionnement du moteur à combustion interne, liée aux dilatations thermiques, dans lequel le limiteur de déformation (7, 8) est disposé dans la zone du profilage en hauteur de la tôle de support (9).

2. Joint de culasse selon la revendication 1, **caractérisé en ce que** le limiteur de déformation (7, 8) est profilé en hauteur et/ou en largeur selon des baisses de pression de compression attendues dans certaines zones du fait de la diminution de la rigidité de composant du bloc-cylindres et de la culasse dans l'état enserré du joint de culasse.

3. Joint de culasse selon la revendication 2, **caractérisé en ce que** le profilage du limiteur de déformation (7, 8) est réalisé sensiblement de manière à correspondre à une zone centrale entre une augmentation de pression de compression attendue liée à des dilatations thermiques et une baisse de pression de compression liée à la diminution des rigidités de composant du bloc-cylindres et de la culasse dans l'état enserré du joint de culasse.

4. Joint de culasse selon l'une quelconque des revendications 1 à 3, **caractérisé en ce que** le profilage en hauteur des limiteurs de déformation (7, 8) est estampé.

5. Joint de culasse selon l'une quelconque des revendications 1 à 4, **caractérisé en ce que** la hauteur du limiteur de déformation (7, 8) est abaissée dans la zone de liaison entre deux ouvertures de chambre de combustion (2) adjacentes par rapport à la hauteur dans la zone d'ouvertures de passage de vis (4) adjacentes.

6. Joint de culasse selon l'une quelconque des revendications 1 à 5, **caractérisé en ce qu'**un limiteur de déformation (7, 8) est disposé sur les deux côtés de la moulure (5) respective.

7. Joint de culasse selon la revendication 6, **caractérisé en ce que** le limiteur de déformation (7) intérieur est plus haut que le limiteur de déformation (8) extérieur.

8. Joint de culasse selon la revendication 6, **caractérisé en ce que** le limiteur de déformation (7) intérieur est aussi haut que le limiteur de déformation (8) extérieur.

9. Joint de culasse selon la revendication 6, **caractérisé en ce que** le limiteur de déformation (7) intérieur est plus bas que le limiteur de déformation (8) extérieur.

10. Joint de culasse selon l'une quelconque des revendications 1 à 5, **caractérisé en ce que** seulement un limiteur de déformation intérieur ou un limiteur de déformation extérieur (7, 8) est prévu pour chacune des moulures (5).

11. Joint de culasse selon l'une quelconque des revendications 1 à 10, **caractérisé en ce que** le limiteur de déformation (7, 8) respectif est refoulé au niveau d'une bague (13) ou d'une tôle de support (9).

12. Joint de culasse selon l'une quelconque des revendications 1 à 10, **caractérisé en ce que** le limiteur de déformation (7, 8) respectif est réalisé sous la forme d'une bague ou d'une section de bague séparée.

13. Joint de culasse selon l'une quelconque des revendications 1 à 12, **caractérisé en ce que** deux tôles de recouvrement (1, 1') moulées sont prévues, lesquelles sont disposées en étant tournées l'une vers l'autre par symétrie de miroir l'une par rapport à l'autre avec les sommets de moulure, entre lesquels se trouvent les limiteurs de déformation (7, 8) éventuellement au niveau d'une tôle de support (9) séparée.
